# EUROPÄISCHE PATENTSCHRIFT

(11) **EP 2 394 546 B1**
(45) Veröffentlichungstag und Bekanntmachung des Hinweises auf die Patenterteilung: **08.08.2018**
(21) Anmeldenummer: 11169385.9
(22) Anmeldetag: 10.06.2011
(51) Int. Cl.: A47J 43/07, A47J 43/08, A47J 44/02, A47J 43/044

(54) **Handküchengerät mit zwei Abtrieben**
Hand-held kitchen appliance with two drives
Appareil de cuisine manuel doté de deux entraînements

(30) Priorität: 10.06.2010 DE 102010029963
(43) Veröffentlichungstag der Anmeldung: 14.12.2011
(73) Patentinhaber: BSH Hausgeräte GmbH, 81739 München (DE)
(72) Erfinder: Caks, Ziga, 2341 Laznica (SI); Corluka, Zeljko, 10000 Zagreb (HR); Duhovnik, Joze, 1215 Medvode (SI); Kokelj, Gasper, 1215 Medvode (SI); Krajnc, Matija, 3331 Nazarje (SI); Lejla, Vida, 1222 Budapest (HU); Oseli, Alen, 4000 Kranj (SI); Somogyvari, Monika, 2132 Göd (HU); Lopez, Javier Verdeguer, 46003 Valencia (ES); Vukasinovic, Nikola, 1231 Ljubljana (SI)

(56) Entgegenhaltungen:
- EP-A1- 1 839 545
- DE-A1-102005 038 917
- US-A- 2 247 707
- US-A- 5 803 598

## Beschreibung

### Hintergrund der Erfindung

Die Erfindung betrifft ein Handküchengerät, insbesondere einen Stabmixer, mit einem Antriebsmotor.

### Stand der Technik

Ein als Stabmixer ausgebildetes Haushaltsgerät wird in dem Gebrauchsmuster DE 89 03 799 U1 offenbart. Das Rührgerät weist einen zylindrisch geformten, üblicherweise aus Kunststoff spritzgegossenen Handgriff auf, aus welchem koaxial ein Wellenschaft auskragt. Der Wellenschaft ist an seinem freien Ende mit einem glockenförmigen, vom Wellenschaft wegweisend offenen Fußteil ausgestattet, in welches ein Werkzeug zur rührenden oder schneidenden Bearbeitung von Behandlungsgut, beispielsweise Teig, Gemüse oder dergleichen, einsetzbar ist. Das Werkzeug wird bei Bedarf durch eine im Wellenschaft angeordnete Antriebswelle in Drehung versetzt. Der Wellenschaft ist seinerseits mit einer elektromotorischen Antriebseinrichtung verbunden.

Aus dem Gebrauchsmuster DE 93 01 408 U1 ist bekannt, ein Handrührgerät mit einem aus Klarsichtfolie bestehenden Spritzschutz auszustatten, welcher in der Mitte Ausnehmungen für die Durchführung der Rührwerkzeuge aufweist und randseitig auf dem Aufnahmegefäß aufliegt. Eine ausreichende Luftzufuhr soll durch Luftlöcher in der Klarsichtfolie gewährleistet werden. Eine derartige Vorrichtung kann hinsichtlich ihrer Handhabung unkomfortabel sein und sie kann auch ein Berühren der Werkzeuge beim unbeabsichtigten Einschalten des Geräts vor dem Auflegen des Spritzschutzes nicht verhindern.

In der Patentschrift DE 100 33 032 C1 wird ein das Werkzeug abschirmendes Fußteil für einen Stabmixer beschrieben, das an seinem unteren Rand wellenartig ausgebildet und an seinen Mantelflächen mit Ausströmöffnungen ausgestattet ist. Durch diese Ausbildung sollen unbeabsichtigtes Spritzen durch aus dem Aufnahmegefäß herausgeschleudertes Behandlungsgut sowie ein Festsaugen des Stabmixers am Boden des Behandlungsgefäßes vermieden werden.

Die üblichen Handküchengeräte haben sich grundsätzlich bewährt. Sie weisen jedoch insbesondere beim Zubereiten unterschiedlicher Nahrungsmitteln eine relativ unflexible Funktionsweise, da ein Benutzer ggf. Werkzeuge austauschen oder alternativ mehrere Zubereitungsschritte bis zum endgültigen Ergebnis durchführen muss. Manchmal muss der Benutzer sogar unterschiedliche Geräte einsetzen, um zu einem gewünschten Produkt zu gelangen.

Die Druckschrift US 5,803,598 zeigt ein Handrührgerät mit zwei Antrieben, die senkrecht zueinander angeordnet sind. Das Gerät kann so wahlweise zum Rühren oder zum Passieren/Mixen verwendet werden.

Die Druckschrift EP 1 839 545 A1 zeigt eine doppelt ausgeführte Gewürzmühle mit sich gegenüberliegenden Mahlwerken. Ein Gravitationsschalter sorgt dafür, dass nur das jeweils nach unten gerichtete Mahlwerk aktivierbar ist.

### Der Erfindung zugrundeliegende Aufgabe

Der Erfindung liegt die Aufgabe zugrunde, ein Handküchengerät bereitzustellen, das eine flexible und zeiteffiziente Zubereitung von Nahrungsmitteln gewährleistet.

### Erfindungsgemäße Lösung

Die der Erfindung zugrunde liegende Aufgabe wird durch ein Handküchengerät gemäß der Merkmalskombination des Anspruchs 1 gelöst. Es wird ein Handküchengerät mit einem Antriebsmotor bereitgestellt. Der Antriebsmotor des Handküchengeräts weist mindestens zwei beidseitig an der Motorachse angeordnete Abtriebe auf. Durch die zwei axial gegenüberliegenden Abtriebe können erfindungsgemäß zeitgleich unterschiedliche Aufgaben zur Nahrungsmittelbearbeitung durchgeführt werden. Die Erfindung findet vorzugsweise bei Handküchengeräten mit einem zylinderförmigen Gehäuseaufbau Einsatz. Die Motorachse stimmt im Wesentlichen mit der Achse des zylinderförmigen Gehäuses und die Abtriebe sind vorzugsweise jeweils an der Deckfläche und an der Grundfläche des zylinderförmigen Gehäuses des Handküchengeräts ausgebildet. Es soll erwähnt werden, dass das zylinderförmige Gehäuse nicht unbedingt Kreisflächen als Grund- bzw. Deckfläche aufweisen muss, vielmehr können weitere allgemeine zylinderförmige Gehäuseformen vorstellbar sein, die durch eine Mantelfläche, Deck- und Grundfläche definiert sind.

Durch die mindestens zwei Abtriebe können Zeitgleich unterschiedliche Nahrungsmittel verarbeitet werden. So kann der erste Abtrieb beispielsweise zum Eiweißschlagen verwendet werden, und gleichzeitig der zweite zum Zerkleinern von Kräutern eingesetzte werden. Das erfindungsgemäße Handküchengerät, insbesondere Stabmixer, kann vorteilhaft per Hand betrieben werden und gleichzeitig auch auf einer Arbeitsfläche in Form einer Küchenmaschine oder Food-Processors.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Es ist bevorzugt, dass der Antriebsmotor einen Hauptkörper umfasst, durch welchen die Motorachse verläuft, wobei die mindestens zwei Abtriebe mit Bezug auf den Hauptkörper beidseitig an der Motorachse angeordnet sind. Durch diesen besonderen Aufbau kann eine symmetrische, kompakte Form des Handküchengeräts gewährleistet werden. Der Hauptkörper des Antriebsmotors umfasst die wesentlichen Funktionsteile wie Stator und Rotor und durch diesen verläuft die Antriebsachse, an welcher die zwei Abtriebe beidseitig angeordnet sind.

Zum Koppeln von Werkzeugen weist jeder Abtrieb eine Koppelstele für mindestens ein Werkzeug auf. Folglich können unterschiedliche Werkzeuge an den jeweiligen Abtrieb gekoppelt werden, um somit Nahrungsmittel zu verarbeiten.

Gemäß einer Ausführungsform der vorliegenden Erfindung ist der Motor in einem Griffstück des Handküchengeräts angeordnet. Dies gewährleistet einen kompakten Aufbau und eine einfache Handhabung des Handküchengeräts durch einen Benutzer.

Bevorzugterweise ist das Griffstück zwischen den Abtrieben, und insbesondere zwischen den Koppelstellen für die Werkzeuge angeordnet. Dadurch, dass der Griff samt Antriebsmotor zwischen den Koppelstellen des Handküchengeräts angeordnet ist, kann eine ausbalancierte Handhabung gesichert werden. Während des Betriebs kann der Benutzer das Handküchengerät am Griff halten und die Koppelstellen mit unterschiedlichen Werkzeugen gleichzeitig betreiben.

Es ist bevorzugt, dass benachbart der Abtriebe ein Flansch für ein Behältnis angeordnet ist. Der Flansch gewährleistet eine fluiddichte Anbindung von Behältnissen und/oder Werkzeuge.

Vorteilhafterweise ist der jeweilige Abtrieb und das jeweilige Behältnis koaxial zueinander angeordnet sind. Dieser Aufbau erlaubt eine kompakte Bauweise des Handküchengeräts und somit auch eine einfache Handhabung. Durch den koaxialen Aufbau kann folglich das Drehmoment des Antriebsmotors direkt auf ein im Behältnis angetriebenen Werkzeug weitergegeben werden.

Zwischen Abtrieb und Werkzeug kann ein Koppelelement angeordnet sein. Das Koppelelement wird zum Anschließen von unterschiedlichen Werkzeugen eingesetzt werden, und kann beispielsweise ein geeignetes Getriebe aufweisen.

Gemäß einer möglichen Ausführungsform der Erfindung ist der eine Abtrieb für ein Messer- und der andere Abtrieb für ein Besen-Werkzeug ausgebildet. Folglich können Eiweiß geschlagen werden und gleichzeitig Kräuter geschnitten werden.

In einer Betriebsposition des Handküchengeräts sind die Motor- bzw. Abtriebsachsen im Wesentlichen in einer Vertikalen angeordnet. In dieser Position weist das Handküchengerät die Funktion eines Stabmixers auf und ein Benutzer kann diesen am Griff handhaben. In dieser Position kann beispielsweise am unteren Abtrieb ein Schneebesen angeschlossen sein und am oberen eine Mischzerkleinerervorrichtung zum Zerhacken von Kräutern. Folglich können mittels beider Werkzeuge zeitgleich Lebensmittel zubereitet werden, und das Handküchengerät weist die Vorteile eines mobilen handhabbaren Geräts auf.

In einer Ausführungsform der Erfindung ist das Besen-Werkzeug unterhalb des Griffstücks und das Messer-Werkzeug oberhalb des Griffstücks in der Betriebsposition des Handküchengeräts angeordnet. Dies erhöht die Flexibilität und Effizienz der Nahrungsmittelverarbeitung.

Das Koppelelement kann als ein Werkzeug-Adapter vorgesehen sein, der jeweils auf jedem der Abtriebe aufsetzbar ist, und dergestalt ausgebildet ist, um Werkzeuge wahlweise auf jedem der Abtriebe betreiben zu können. Der Adapter unterstreicht die modulare Arbeitsweise des Handküchengeräts und ein Benutzer kann die gewünschten Aufgaben durch geeignetes Werkzeug zeiteffizient durchführen.

Erfindungsgemäß bevorzugt weist das Behältnis mindestens einen ersten Behälter und einen zweiten Behälter auf, in welchen jeweils ein Werkzeug antreibbar ist, wobei der erste und der zweite Behälter übereinander gestapelt betreibbar sind, dergestalt, dass zeitgleich Lebensmittel zubereitet werden können. Auch denkbar ist, dass nur der eine Behälter, der direkt an der Koppelstelle angeschlossen ist zur Nahrungsmittelverarbeitung eingesetzt wird, wobei der andere Behälter zur Lagerung auf dem ersten Behälter gelagert ist.

Die oben offenbarten Merkmale können sowohl einzeln als auch in beliebiger Kombination für die Verwirklichung der Erfindung in ihren verschiedenen Ausgestaltungen von Bedeutung sein.

### Kurzbeschreibung der Figuren

Die Erfindung wird im Folgenden anhand schematischer Zeichnungen an mehreren Ausführungsbeispielen mit weiteren Einzelheiten näher erläutert.

Es zeigen:
- Fig. 1:: eine perspektivische Ansicht eines Handküchengeräts gemäß vorliegender Erfindung;
- Fig. 2:: eine Seitenansicht des erfindungsgemäßen Küchengeräts
- Fig. 3a:: eine Seitenansicht des oberen Behältnisses;
- Fig. 3b:: eine Seitenansicht des unteren Behältnisses;
- Fig. 3c:: eine perspektivische Ansicht des oberen Behältnisses;
- Fig. 3d:: eine perspektivische Ansicht des oberen Behältnisses;
- Fig. 4:: das Handküchengerät nebst Werkzeugadapter; und schließlich
- Fig. 5:: eine Explosionsansicht eines Handküchengeräts gemäß der vorliegenden Erfindung.

### Ausführliche Beschreibung der Erfindung

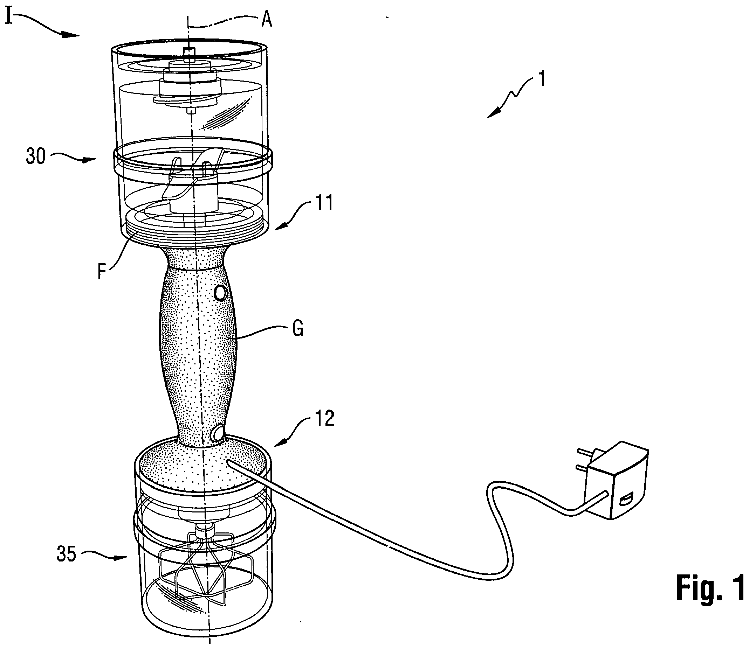

Das in Fig. 1 dargestellte Handküchengerät 1 ist als Stabmixer ausgebildet und besteht aus einem Handgriff G. Der Handgriff G wird wesentlich von dem Gehäuse des Handküchengeräts gebildet und besteht üblicherweise aus Kunststoff. Zur besseren Handhabung weist der Griff beispielsweise eine gummiert Fläche, die einen sicheren Griff gewährleistet.

Am Handgriff G sind Steuerknöpfe vorgesehen, welche die Steuerung des Handküchengeräts 1 durch den Benutzer erlauben. So können beispielsweise unterschiedliche Rotationsgeschwindigkeiten für die Werkzeuge eingestellt werden, und weiter auch mechanische Funktionen geregelt werden. So kann innerhalb des Handgriffs G ein Auswurfmechanismus für die Werkzeuge und/oder Behälter implementiert werden. Ein Benutzer kann dann einfach mit Hilfe eines Drucktasters das Werkzeug von der Koppelstelle am Abtrieb wieder lösen und beispielsweise reinigen.

Gemäß einer möglichen Ausführungsform ist im Handgriff G keine Leiterplatte, welche die Steuerung des Handküchengeräts bereitstellt, enthalten. Um Gewicht bzw. Raum zu sparen kann die Leiterplatte direkt im Stromanschlussadapter angeordnet werden, der sich am Ende des Kabels befindet, und worüber das Gerät mit elektrischem Strom versorgt wird. Auf diesem Adapter kann sich gemäß einem Ausführungsbeispiel auch eine Drucktaste für die Leistungsregelung des Handküchengeräts 1 befinden. In einer anderen Ausführungsform kann das Handküchengerät 1 als akkubetriebenes Handküchengerät ausgebildet sein, und in diesem Fall werden im Handgriff G die notwendigen Akkumulatoren angeordnet.

Der Handgriff G des Handküchengeräts weist eine Höhe von ca. 198 mm auf und weist im Wesentlichen eine zylindrische Form auf. Damit ein Benutzer den Handgriff G gut halten kann weist dieser eine Breite von ca. 60mm auf. Somit kann eine ergonomische und gleichzeitig platzsparende Form gewährleistet werden.

Das Handküchengerät 1 weist zwei Abtriebe 11 und 12 auf, die entsprechende Koppelstellen für Werkzeuge und/oder Behältnisse 30, 35 auf. Die Behältnisse 30, 35 können einstückig oder mehrteilig ausgebildet sein. Zur Abdichtung weisen die Koppelstellen 21, 22 jeweils einen abgedichteten Flansch auf. Zur Abdichtung kann beispielsweise eine lösbare Ringdichtung vorgesehen werden, jedoch ist eine integrale Anbringung der Rinddichtung am Flansch F oder am jeweiligen Behältnis 30, 35 ebenfalls denkbar.

Der Handgriff G ist als Gehäuse ausgebildet, in welchem weiter der Antriebsmotor 10 des Handküchengeräts 1 angeordnet ist. Der Motor 10 weist eine Motorachse A auf, die in dieser Ausführungsform mit der Achse des zylinderförmigen Handgriffs G übereinstimmt. Mit Bezug auf Fig. 1 sind unten und oben am Handgriff zwei Abtriebe 12 bzw. 11 ausgebildet, die mit geeigneten Koppelstellen 22, 21 für Werkzeuge und/oder Behältnisse 30, 35 versehen sind. Die zwei Abtriebe 11 und 12 sind an der Motorachse A beidseitig bezüglich des Handgriffs G angeordnet. D. h. der im Wesentlichen zylinderförmige Handgriff G weist in seiner Deck- bzw. Grundfläche jeweils ein Abtrieb bzw. eine Koppelstelle für Werkzeug und/oder Behältnisse auf. In diesem Beispiel weist der Handgriff die Form einer Hantel auf, und die Deck- bzw. Grundfläche entsprechen folglich der jeweiligen Außenseite des Bereichs wo die Gewichte der Hantel angeordnet wären.

In der Fig. 1 sind in den entsprechenden Koppelstellen zwei Behältnisse 30, 35 angeschlossen, in welchen jeweils Werkzeuge zur Nahrungsmittelbearbeitung vom Antriebsmotor 10 angetrieben werden können.

Die Abtriebe 11 und 12 könne gleichzeitig durch den Motor 10 angetrieben werden, so dass eine gleichzeitige Nahrungsmittelverarbeitung mittels beider Abtriebe 11 und 12 durch das Handküchengerät bereitgestellt werden kann. Ferner ist es denkbar, dass der Benutzer mit Hilfe eines Tasters auswählen kann, ob beide Abtriebe 11, 12 in Betrieb genommen werden sollen, oder ob nur einer der Abtriebe aktiv ist.

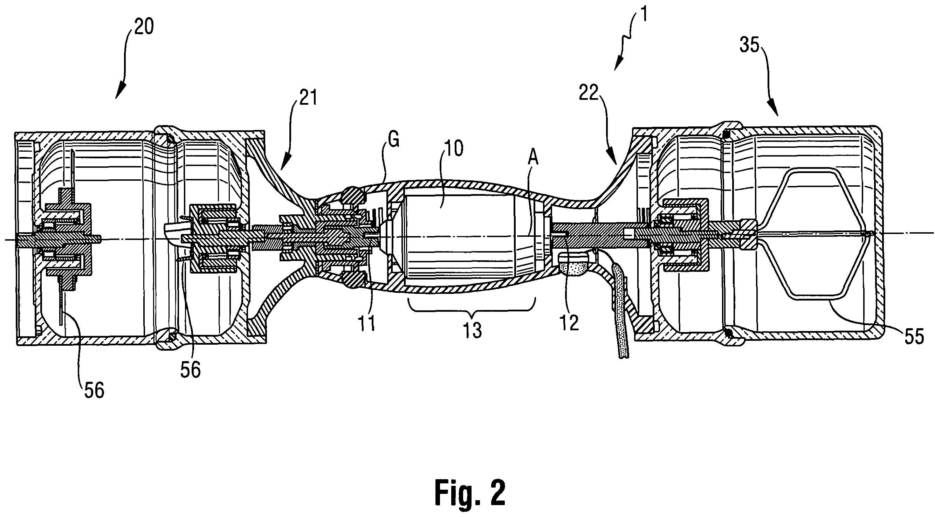

Fig. 2 zeigt eine Seitenansicht der erfindungsgemäßen Handküchengeräts. Wie bereits erwähnt weist das Handküchengerät 10 eine im Wesentlichen zylinderförmige Ausgestaltung mit einer Motorachse A, die der Achse des Handgriffs G entspricht. Entlang der Achse A sind axial zwei Abtriebe 11 und 12 angeordnet, welche mittels des Motors 10 angetrieben werden. Bei dem Motor 10 kann es sich beispielsweise um einen Doppelwellenmotor 10 handeln, der zwei axial angeordnete Wellen bereitstellt. Jeder der Abtriebe 11 und 12 weist eine jeweilige Koppelstelle 21 und 22 für Werkzeuge oder Behälter 30, 35 auf.

Der Antriebsmotor 10 ist vorzugsweise als Elektromotor ausgebildet und kann mittels eines Stromkabels gespeist werden. In einer weiteren Ausführungsform sind innerhalb des Handgriffs G Akkumulatoren angeordnet, welche wiederum den Antriebsmotor 10 mit der notwendigen Energie versorgen.

Die zwei Abtriebe des Elektromotors 10 sind symmetrisch bezüglich eines Hauptkörpers 13 des Motors 10 ausgebildet. Somit kann das Drehmoment beidseitig entlang der Motorachse A abgeleitet werden. Die Wellen des Motors 10 sind übe geeignete Koppelstellen 21, 22 mit den jeweiligen Werkzeuge wirkverbunden, so dass diese ebenfalls in Rotation versetzt werden können.

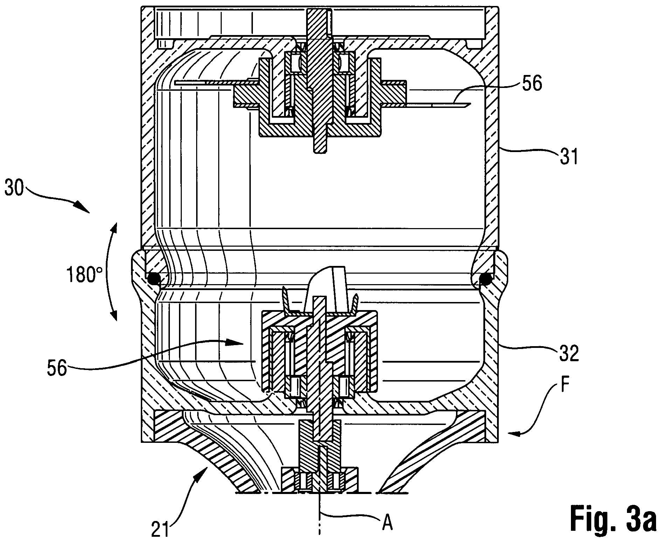

Fig. 3a zeigt ein Behältnis zur Nahrungsmittelverarbeitung. Das Behältnis 30 umfasst zwei Behälter, einen oberen und einen unteren Behälter 31 bzw. 32. Innerhalb der Behälter sind jeweils zwei Werkzeuge angeordnet, die als Messer-Werkzeug ausgebildet sind. Mittels der Messer-Werkzeuge 56 können Lebensmittel zerkleinert werden, und das Handküchengerät 1 kann als Chopper bzw. Zerkleinerer eingesetzt werden. Die Werkzeuge 56 werden in dieser Ausführungsform mit der Koppelstelle 21 mit dem Antriebsmotor 10 bzw. mit dem entsprechenden Abtrieb 11 oder 12 wirkverbunden werden.

Das Behältnis 30 ist zweiteilig aufgebaut und jeder der beiden Behälter 31 und 31 weist ein Messerwerkzeug 56 auf. Das obere Messer kann als Chopper eingesetzt werden und das untere beispielsweise zum Zerkleinern von Eis oder zum Haken von Zwiebeln verwendet werden. Um die jeweilige Funktion ausüben zu können, muss ein Benutzer das Behältnis 30 um 180° drehen, und entsprechend auf die Koppelstelle 21 oder 22 montieren. Der Flansch F und die Ringdichtung gewährleisten eine fluiddichte Verbindung beider Komponenten. Diesen Montageschritt ist in der Fig. 3a mit Hilfe eines DoppelPfeils angedeutet. Im unteren Bereich der Fig. 3a ist die Koppestelle 21 des Abtriebs 11 des Antriebsmotors 10 zu erkennen, der folglich das Messerwerkzeug 56 des zweiten Behälters 32 antreibt.

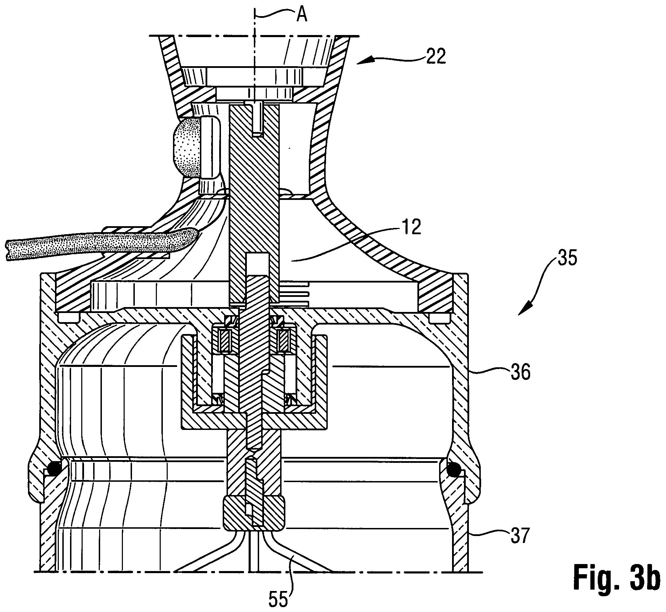

Fig. 3b zeigt das untere Behältnis. Das Behältnis 35 ist ebenfalls zweiteilig ausgeführt und weist einen oberen und einen unteren Behälter 36, 37 auf. Das Behältnis 35 wirkt ebenfalls mit der Schnittstelle 22 an einem Flansch F zusammen um eine fluiddichte Wirkverbindung zu gewährleisten. Innerhalb des Behälters wird ein Schneebesenwerkzeug 55 mittels des Antriebsmotors 10 angetrieben. Es ist denkbar, dass Lebensmittel direkt im Behältnis 35 verarbeitet werden, es ist jedoch auch denkbar, dass das Werkzeug 55 ohne Behältnis 35 in ein Mischgut eingetaucht werden kann. In diesem Fall könnte das Handküchengerät 1 als herkömmlicher Handrührer oder Handmixer eingesetzt werden.

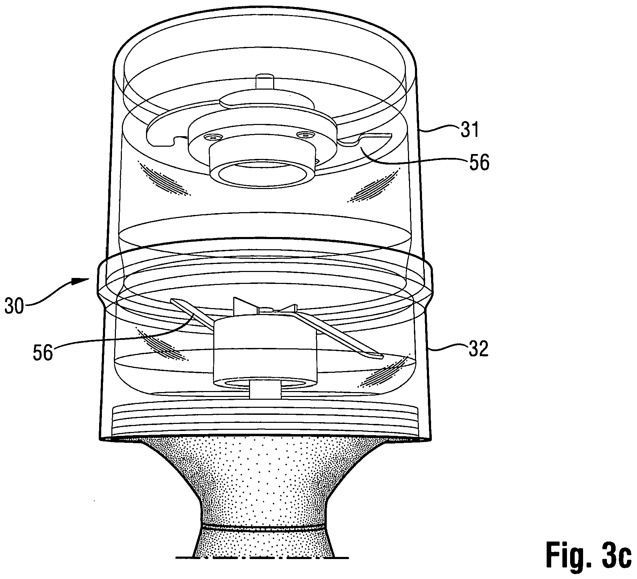

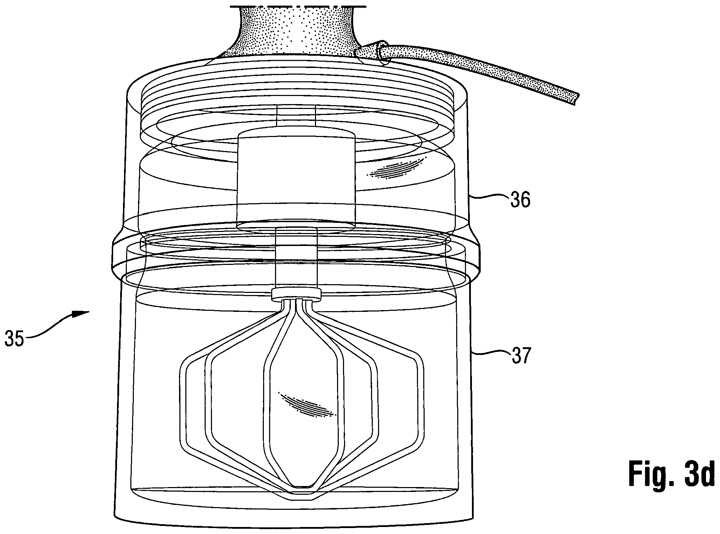

Fig. 3c zeigt eine perspektivische Ansicht des Behältnisses gemäß Fig. 3a und Fig. 3d eine perspektivische Ansicht der Fig. 3b.

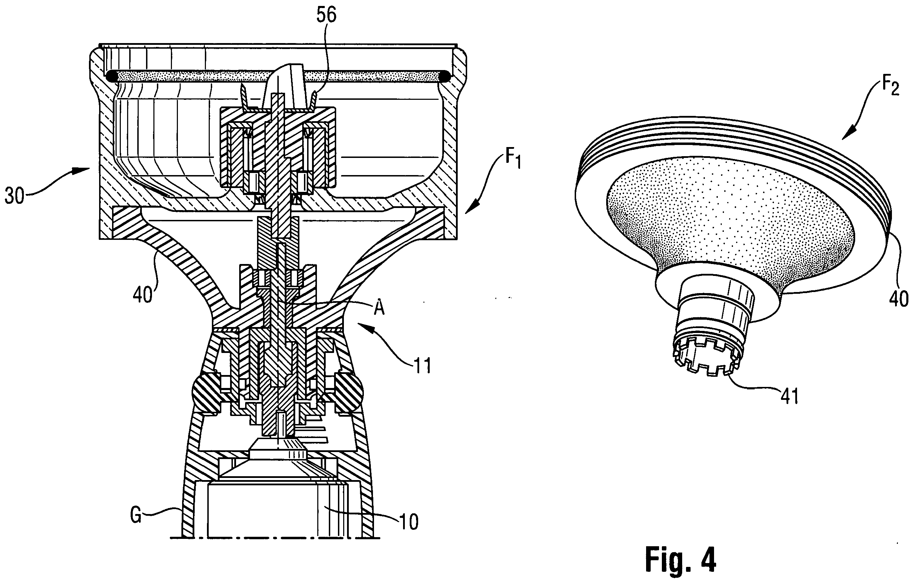

Fig. 4 zeigt eine Teilansicht auf das Handküchengerät gemäß der Erfindung nebst Koppelement als Werkzeugadapter. In einer Ausführungsform der vorliegenden Erfindung ist ein Werkzeugadapter 40 vorgesehen. Der Adapter 40 kann auf einer der Koppelstellen 11 oder 12 aufgesetzt werden, um folglich Werkzeuge 55, 56 oder Behältnisse 30, 35 mit dem Antriebsmotor 10 bzw. mit dem Flansch F am Handgriff G zu verbinden. Der Adapter 40 kann beispielsweise eingesetzt werden um abwechselnd Werkzeuge auf die untere und/oder obere Koppelstelle aufzusetzen.

Der Adapter 40 weist eine Adapterkoppelstelle 41, die mit der Koppelstelle am Handgriff G zusammenwirkt. So kann das Drehmoment des Antriebsmotors 10 auf das Werkzeug 55 oder 56 übertragen werden. Zur Ankoppelung an eines der Behältnisse weist der Adapter 40 einen Flansch F2 der mit einem am Behältnis ausgebildeten Flansch F1 zusammenwirkt.

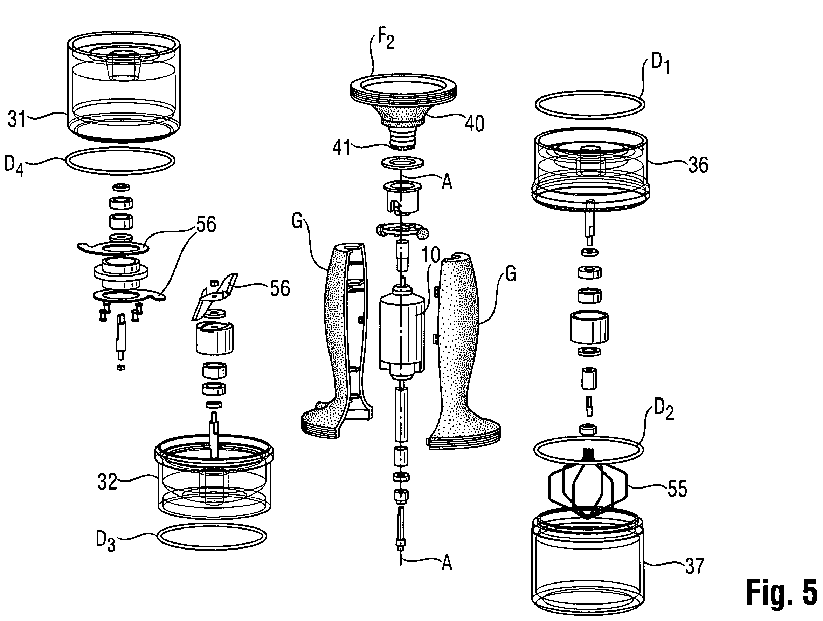

Fig. 5 zeigt das Handküchengerät gemäß der Erfindung in einer Explosionsansicht. Das als Handgriff G ausgebildete Gehäuse weist zwei aus Kunststoff hergestellten Halbschalen, die den Antriebsmotor 10 und ggf. weitere Steuereinheiten des Handküchengeräts. Der Motor 10 weist zwei Wellen auf, welche gegenüberliegend zwei Abtriebe 11 und 12 antreibt. Die zwei Abtriebe 11 und 12 weisen geeignete Koppelstellen 21 und 22 auf, die wiederum mit Verarbeitungswerkzeuge 55, 56 zur Nahrungsmittelbearbeitung zusammenwirken. Der Motor bzw. die Abtriebe 11, 12 weisen eine gemeinsame Achse A auf, so dass beide Abtriebe auf der Grund- bzw. Deckelfläche des zylinderförmigen Handgriffs G (Gehäuse) angeordnet sind.

Um unterschiedliche Behälter 30, 35 anschließen zu können, weist das Handküchengerät einen Adapter 40 auf, der mit einer der Koppelstellen 21 oder 22 zusammenwirken kann. In diesem Ausführungsbeispiels wird der Adapter 40 auf die obere Koppelstelle 21 aufgesetzt. Auch der Adapter 40 weist einen Dichtflansch F2 auf, der mit einem ersten Flansch F1 am oberen Behältnis 30 zusammenwirkt. Mit Hilfe eines Dichtungsrings D1, D2, D3 oder D4 kann folglich eine fluiddichte Wirkverbindung an den Koppelstellen erreicht werden.

Mit der Erfindung ist vorteilhaft erreichbar, dass die Nahrungsmittelbearbeitung flexibel und zeiteffizient durchgeführt werden kann.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Handküchengerät (1) mit einem Antriebsmotor (10), wobei der Antriebsmotor (10) mindestens zwei beidseitig an der Motorachse (A) angeordnete Abtriebe (11, 12) aufweist, **dadurch gekennzeichnet, dass** das Handküchengerät (1) derart ausgestaltet ist, dass gleichzeitig jeder Abtrieb (11, 12) mit einer Koppelstelle (21, 22) für mindestens ein Werkzeug (55, 56) zusammenwirkt, wobei die Abtriebe gleichzeitig durch den Motor (10) antreibbar sind, so dass eine gleichzeitige Nahrungsmittelverarbeitung mittels beider Abtriebe (11, 12) durch das Handküchengerät (1) bereitgestellt wird.

2. Handküchengerät (1) nach Anspruch 1, **dadurch gekennzeichnet, dass** der Antriebsmotor (10) einen Hauptkörper (13) umfasst, durch welchen die Motorachse (A) verläuft, wobei die mindestens zwei Abtriebe (11, 12) mit Bezug auf den Hauptkörper (13) beidseitig an der Motorachse (A) angeordnet sind.

3. Handküchengerät (1) nach einem der Ansprüche 1 bis 2, **dadurch gekennzeichnet, dass** der Motor (10) in einem Griffstück (G) des Handküchengeräts (1) angeordnet ist.

4. Handküchengerät (1) nach Anspruch 3, **dadurch gekennzeichnet, dass** das Griffstück (G)zwischen den Abtrieben (11, 12), und insbesondere zwischen den Koppelstellen (21, 22) für die Werkzeuge (55, 56) angeordnet ist.

5. Handküchengerät (1) nach einem der vorherigen Ansprüche, **dadurch gekennzeichnet, dass** benachbart der Abtriebe (11, 12) ein Flansch (F) für ein Behältnis (30, 35) angeordnet ist.

6. Handküchengerät (1) nach Anspruch 5, **dadurch gekennzeichnet, dass** der jeweilige Abtrieb (11, 12) und das jeweilige Behältnis (30, 35) koaxial zueinander angeordnet sind.

7. Handküchengerät (1) nach einem der vorherigen Ansprüche, **dadurch gekennzeichnet, dass** zwischen Abtrieb (11, 12) und Werkzeug (55, 56) ein Koppelelement (40) angeordnet ist.

8. Handküchengerät (1) nach einem der vorherigen Ansprüche, **dadurch gekennzeichnet, dass** der eine Abtrieb (11) für ein Messer- (56) und der andere Abtrieb (12) für ein Besen-Werkzeug (55) ausgebildet ist.

9. Handküchengerät (1) nach einem der vorherigen Ansprüche, **dadurch gekennzeichnet, dass** in einer Betriebsposition (I) des Handküchengeräts (1) die Motor- bzw. Abtriebsachsen (A) im Wesentlichen in einer Vertikalen angeordnet sind.

10. Handküchengerät (1) nach einem der vorherigen Ansprüche, **dadurch gekennzeichnet, dass** mittels beider Werkzeuge (55, 56) zeitgleich Lebensmittel zubereitet werden können.

11. Handküchengerät (1) nach Anspruch 8, **dadurch gekennzeichnet, dass** das Besen-Werkzeug (55) unterhalb des Griffstücks (G) und das Messer-Werkzeug (56) oberhalb des Griffstücks (G) in der Betriebsposition (I) des Handküchengeräts (1) angeordnet ist.

12. Handküchengerät (1) nach einem der vorherigen Ansprüche, **dadurch gekennzeichnet, dass** das Koppelelement als ein Werkzeug-Adapter (40) vorgesehen ist, der jeweils auf jedem der Abtriebe (11, 12) aufsetzbar ist, und dergestalt ausgebildet ist, um Werkzeuge (55, 56) wahlweise auf jedem der Abtriebe (11, 12) betreibbar sind.

13. Handküchengerät (1) nach Anspruch 5, **dadurch gekennzeichnet, dass** das Behältnis (30, 35) mindestens einen ersten Behälter (31, 36) und einen zweiten Behälter (32, 37) aufweist, in welchen jeweils ein Werkzeug (55, 56) antreibbar ist, wobei der erste und der zweite Behälter (31, 32, 36, 37) übereinander gestapelt betreibbar sind, dergestalt, dass zeitgleich Lebensmittel zubereitet werden können.

14. Verfahren zur Nahrungsbearbeitung mit einem Handküchengerät (1) gemäß einem der vorherigen Ansprüche, wobei das Verfahren eine gleichzeitige Nahrungsmittelverarbeitung mittels beider Abtriebe (11, 12) umfasst, die gleichzeitig durch den Motor (10) angetrieben werden.

## Claims

1. Hand-held kitchen appliance (1) with a drive motor (10), wherein the drive motor (10) has at least two drives (11, 12) arranged on both sides of the motor axis (A),
**characterised in that** the hand-held kitchen appliance (1) is designed such that each drive (11, 12) cooperates simultaneously with a coupling point (21, 22) for at least one tool (55, 56), wherein the drives can be driven simultaneously by the motor (10), so that a simultaneous food processing by means of both drives (11, 12) is provided by the hand-held kitchen appliance (1).

2. Hand-held kitchen appliance (1) according to claim 1, **characterised in that** the drive motor (10) comprises a main body (13), through which the motor axis (A) runs, wherein the at least two drives (11, 12) are arranged on both sides of the motor axis (A) with respect to the main body (13).

3. Hand-held kitchen appliance (1) according to one of claims 1 to 2, **characterised in that** the motor (10) is arranged in a handle (G) of the hand-held kitchen appliance (1).

4. Hand-held kitchen appliance (1) according to claim 3, **characterised in that** the handle (G) is arranged between the drives (11, 12), and in particular between the coupling points (21, 22) for the tools (55, 56).

5. Hand-held kitchen appliance (1) according to one of the preceding claims, **characterised in that** a flange (F) for a receptacle (30, 35) is arranged adjacent to the drives (11,12).

6. Hand-held kitchen appliance (1) according to claim 5, **characterised in that** the respective drive (11, 12) and the respective receptacle (30, 35) are arranged coaxially with respect to one another.

7. Hand-held kitchen appliance (1) according to one of the preceding claims, **characterised in that** a coupling element (40) is arranged between drive (11, 12) and tool (55, 56).

8. Hand-held kitchen appliance (1) according to one of the preceding claims, **characterised in that** the one drive (11) is embodied for a blade tool (56) and the other drive (12) for a whisk tool (55).

9. Hand-held kitchen appliance (1) according to one of the preceding claims, **characterised in that** in an operating position (I) of the hand-held kitchen appliance (1) the motor or drive axes (A) are arranged substantially in a vertical line.

10. Hand-held kitchen appliance (1) according to one of the preceding claims, **characterised in that** groceries can be prepared at the same time using both tools (55, 56).

11. Hand-held kitchen appliance (1) according to claim 8, **characterised in that** in the operating position (I) of the hand-held kitchen appliance (1) the whisk tool (55) is arranged below the handle (G) and the blade tool (56) is arranged above the handle (G).

12. Hand-held kitchen appliance (1) according to one of the preceding claims, **characterised in that** the coupling element is provided as a tool adapter (40), which can be placed in each case on each of the drives (11, 12), and is embodied in such a way so that tools (55, 56) can optionally be operated on each of the drives (11, 12).

13. Hand-held kitchen appliance (1) according to claim 5, **characterised in that** the receptacle (30, 35) has at least a first container (31, 36) and a second container (32, 37), in which a tool (55, 56) can be driven in each case, wherein the first and the second container (31, 32, 36, 37) can be operated stacked one on top of the other, in such a way that food can be processed at the same time.

14. Method for processing food with a hand-held kitchen appliance (1) according to one of the preceding claims, wherein the method comprises a simultaneous food processing by means of both drives (11, 12), which are driven simultaneously by the motor (10).

## Revendications

1. Appareil de cuisine manuel (1) doté d'un moteur d'entraînement (10), dans lequel le moteur d'entraînement (10) comprend au moins deux entraînements (11, 12) disposés des deux côtés sur l'axe du moteur (A),
**caractérisé en ce que** l'appareil de cuisine manuel (1) est conçu de telle sorte que chaque entraînement (11, 12) coopère simultanément avec un point d'accouplement (21,22) pour au moins un accessoire (55, 56),
et dans lequel les entraînements peuvent être entraînés simultanément par le moteur de telle sorte qu'une transformation d'aliments simultanée peut être réalisée au moyen des deux entraînements (11, 12) par l'appareil de cuisine manuel (1).

2. Appareil de cuisine manuel (1) selon la revendication 1, **caractérisé en ce que** le moteur d'entraînement (10) comporte un corps principal (13), au travers duquel l'axe du moteur (A) passe, et dans lequel les au moins deux entraînements (11, 12) sont disposés des deux côtés sur l'axe du moteur (A) par rapport au corps principal (13).

3. Appareil de cuisine manuel (1) selon l'une des revendications 1 à 2, **caractérisé en ce que** le moteur (10) est disposé dans une poignée (G) de l'appareil de cuisine manuel (1).

4. Appareil de cuisine manuel (1) selon la revendication 3, **caractérisé en ce que** la poignée (G) est disposée entre les entraînements (11, 12) et notamment entre les points d'accouplement (21, 22) des accessoires (55, 56).

5. Appareil de cuisine manuel (1) selon l'une quelconque des revendications précédentes, **caractérisé en ce qu'**une bride (F) pour un récipient (30, 35) est disposée de façon adjacente aux entraînements (11, 12).

6. Appareil de cuisine manuel (1) selon la revendication 5, **caractérisé en ce que** l'entraînement respectif (11, 12) et le récipient correspondant (30, 35) sont disposés de façon coaxiale l'un vis-à-vis de l'autre.

7. Appareil de cuisine manuel (1) selon l'une des revendications précédentes, **caractérisé en ce qu'**un élément d'accouplement (40) est disposé entre l'entraînement (11, 12) et l'accessoire (55, 56).

8. Appareil de cuisine manuel (1) selon l'une quelconque des revendications précédentes, **caractérisé en ce qu'**un des entraînements (11) est conçu pour un accessoire de couteau (56) et l'autre entraînement (12) est conçu pour un accessoire de fouet (55).

9. Appareil de cuisine manuel (1) selon l'une quelconque des revendications précédentes, **caractérisé en ce que**, dans une position de service (I) de l'appareil de cuisine manuel (1), les axes de moteur resp. d'entraînement (A) sont disposés essentiellement dans une ligne verticale.

10. Appareil de cuisine manuel (1) selon l'une quelconque des revendications précédentes, **caractérisé en ce que** des aliments peuvent être préparés simultanément au moyen des deux accessoires (55, 56).

11. Appareil de cuisine manuel (1) selon la revendication 8, **caractérisé en ce que** l'accessoire de fouet (55) est disposé sous la poignée (G) et l'accessoire de couteau (56) est disposé au-dessus de la poignée (G) dans la position de service (I) de l'appareil de cuisine manuel (1).

12. Appareil de cuisine manuel (1) selon l'une quelconque des revendications précédentes, **caractérisé en ce que** l'élément d'accouplement est construit sous forme d'un adaptateur d'accessoire (40) qui peut être installé sur chacun des entraînements (11, 12) et qui est conçu de manière à ce que des accessoires (55, 56) puissent être utilisés au choix sur chacun des entraînements (11, 12).

13. Appareil de cuisine manuel (1) selon la revendication 5, **caractérisé en ce que** les récipients (30, 35) comprennent chacun au moins un premier contenant (31, 36) et un second contenant (32, 37), dans lesquels un accessoire respectif (55, 56) peut être entraîné, les premiers et seconds contenants (31, 32, 36, 37) pouvant être utilisés en étant empilés respectivement l'un sur l'autre, de sorte à pouvoir préparer des aliments simultanément.

14. Procédé de transformation d'aliments au moyen d'un appareil de cuisine manuel (1) selon l'une quelconque des revendications précédentes, lequel procédé comprend une transformation simultanée d'aliments au moyen de deux entraînements (11, 12) qui sont entraînés simultanément par le moteur (10).
